# EUROPÄISCHE PATENTSCHRIFT

(11) **EP 1 440 731 B1**
(45) Veröffentlichungstag und Bekanntmachung des Hinweises auf die Patenterteilung: **14.05.2008**
(21) Anmeldenummer: 03025650.7
(22) Anmeldetag: 07.11.2003
(51) Int. Cl.: B01J 23/889, C01B 3/58, B01D 53/94, B01D 53/62, H01M 8/06

(54) **Ce/Cu/Mn-Katalysatoren und Verfahren zu deren Herstellung**
Ce/Cu/Mn-Catalysts and process for making them
Ce/Cu/Mn-Catalyseurs et procédé pour leur fabrication

(30) Priorität: 08.11.2002 DE 10252103
(43) Veröffentlichungstag der Anmeldung: 28.07.2004
(73) Patentinhaber: SÜD-CHEMIE AG, 80333 München (DE); Fraunhofer-Gesellschaft zur Förderung der angewandten Forschung e.V., 80686 München (DE); FORD-WERKE AKTIENGESELLSCHAFT, 50725 Köln (DE)
(72) Erfinder: Heinzel, Dr. Angelika, 79115 Freiburg (DE); Hübner, Peter, 79111 Freiburg (DE); Susdorf, Alexander, 79110 Freiburg (DE); Chigapov, Albert Dr., 52072 Aachen (DE); Wanninger, Klaus Dr., 83059 Kolbermoor (DE); Koy, Jürgen Dr., 83109 Grosskarolinenfeld (DE)
(74) Vertreter: Westendorp, Michael Oliver

(56) Entgegenhaltungen:
- EP-A- 0 344 727
- EP-A- 0 482 753
- EP-A- 1 197 259
- US-A- 5 502 019
- US-A1- 2002 147 103

## Beschreibung

Die Erfindung betrifft einen Mischoxid-Katalysator, der einerseits für die selektive Oxidation von CO in wasserstoffreichen Gasgemischen, insbesondere für Brennstoffzellen, andererseits für die Verminderung des CO-Gehalts in sauerstoffhaltigen Gasgemischen, z.B. Automobil- und industriellen Abgasen geeignet ist.

Brennstoffzellen stellen eine zukünftige Schlüsseltechnologie dar, z.B. für die Automobilindustrie, für stationäre Elektrizität, für die Bereitstellung von Wärme, sowie für tragbare Geräte mit einer Leistung von bis zu 250 Watt.

Grundsätzlich haben Brennstoffzellen einen höheren energetischen Wirkungsgrad als Verbrennungsmotoren, und sie erreichen eine Systemeffizienz von 70 bis 80% (einschließlich der Nutzung der Abwärme) in Kraftwerken, verglichen mit einem Wirkungsgrad von 30 bis 37% bei der Verbrennung. Polymer-Elektrolyt-Membran (PEM)-Brennstoffzellen sind kompakt und haben den Vorteil einer hohen Leistungsdichte und niedrigerer Betriebstemperatur. Ein wesentlicher Nachteil ist die reversible Vergiftung der Elektroden (Pt, Pt/Ru) durch CO, das als Verunreinigung in den zum Betrieb der Brennstoffzellen erforderlichen wasserstoffreichen Gasgemischen vorhanden ist. Diese Gasgemische werden im Allgemeinen durch Dampfreformierung von Kohlenwasserstoffen und durch Wassergaskonvertierung (water gas shift reaction) erhalten. Es ist nicht möglich, das entstehende CO vollständig zu eliminieren. Die Feinreinigung zur Entfernung des CO bis in den ppm-Bereich (10 bis 100 ppm) erfolgt durch eine selektive Oxidation unter Zusatz einer kleinen Menge von Sauerstoff. Hierfür wird ein hochselektiver Katalysator benötigt, der in der Lage ist, bei den niedrigst möglichen Temperaturen CO vollständig zu oxidieren, ohne den Wasserstoff zu oxidieren.

Bisher wurden für diesen Zweck fast ausschließlich Edelmetall-Katalysatoren eingesetzt. Es sind aber nur wenige Edelmetall-Katalysatoren sowohl aktiv als auch selektiv genug, um in einer Stufe den CO-Gehalt unter 10 bis 100 ppm zu vermindern. Ein großes Problem ist die Temperaturabhängigkeit der Selektivität. Die Reaktion, bei der CO mit O₂ zur CO₂ oxidiert wird, ist stark exotherm. Deshalb ist es sehr schwer, ein enges Temperaturintervall einzuhalten. Wird der Katalysator zu warm, sinkt die Selektivität.

Ein sehr guter Edelmetallkatalysator, der in den USA häufig angewendet wird, ist beispielsweise in der US-A-5 271 916 beschrieben. Ein derartiger Katalysator wurde auch von R. Farrauto in "Catal. Today" 62, (2000), 249-254, beschrieben. Dieser Katalysator enthält 5% Platin.

Der Nachteil der heute gebräuchlichen edelmetallhaltigen Katalysatoren besteht einmal darin, dass sie sehr teuer sind. Des weiteren zeigen auch nicht alle Edelmetall-Katalysatoren eine ausreichende Selektivität über ein großes Temperaturintervall.

Edelmetallfreie Katalysatoren zur selektiven Oxidation von CO haben sich bisher noch.nicht durchgesetzt.

Es gibt jedoch eine umfangreiche Literatur über die selektive Oxidation von CO in wasserstoffreichen Gemischen unter Verwendung von edelmetallfreien Oxidkatalysatoren. Beispielsweise wurden Cu/Mn-Oxidkatalysatoren von T. Ueda et al. in der JP 2001000841 A2 und von R. Imamura in der JP 11104491 A2 beschrieben (Lit. 22, 23). CuO/CeO₂-Katalysatoren mit 6% Cu wurden von Avgouropoulos et al. in "Catal. Lett." 73 (1), (2001), 33-40, J.C. Zhang in "Chem. Lett." 9 (9); (1998), 873-876 und A.N. Shigapov et al. EUROPACAT-4, Rimini, Italien, September 1999, Book of Abstracts, 1838 (Lit. 24, 25, 26) beschrieben.

Diese Katalysatoren zeigen eine starke Temperaturabhängigkeit der Selektivität, was bedeutet, dass das Temperaturintervall, in welchem 10 bis 100 ppm CO erreicht werden können, sehr klein ist (etwa 165 bis 175°C).

Die aussichtsreichsten Katalysatoren sind Cu/Mn- und Cu/Ce-Mischoxidkatalysatoren, doch ist ihre Aktivität bei der selektiven Oxidation von CO unterhalb von 200°C in Gegenwart von Wasserstoff noch unbefriedigend.

Die EP 0 344 727 A1 beschreibt ein Mischoxid aus Cer, Kupfer und Mangan, wobei das Atomverhältnis Ce : (Cu, Mn) zwischen 1 : 2 und 2 : 1 liegt und die Metalle im Mischoxid in den oxidischen Formen CeO₂ und Cu_{xmn 3-x} O₄ vorliegen, worin x eine Zahl größer als 0 und kleiner als 3 ist.

Die EP 1 197 259 A1 offenbart Oxidationskatalysatoren enthaltend Mischoxide von Kupfer, Mangan und einem oder mehreren Seltenerdenmetallen, worin die Metalle mehrere Valenzzustände annehmen können, wobei die Zusammensetzung 8 bis 50 Gew.% Kupfer, ausgedrückt als CuO, 10 bis 75 Gew.% Mangan, ausgedrückt als MnO, und 2 bis 15 Gew.% Seltenerdenmetalloxide (worin das Metall die niedrigste Valenzstufe hat) aufweist.

Kupferhaltige Mischoxidkatalysatoren wurden auch zur Entfernung von CO aus sauerstoffhaltigen Gasgemischen, z.B. von Automobilabgasen sowie aus industriellen Abgasen verwendet. Ihre Aktivität bei der Oxidation von CO bei Temperaturen unterhalb 200°C ist geringer als die von Edelmetallkatalysatoren. Einige Mischoxide (hopcalitähnliche Cu/Mn-Katalysatoren) sind gegenüber Wasserdampf und CO₂ im Gasgemisch empfindlich, d.h. sie werden, verglichen mit den Edelmetallkatalysatoren, leichter durch Wasserdampf und CO₂ vergiftet, weshalb ihre Aktivität für eine erfolgreiche Anwendung als Dreiwege-Katalysatoren (TWC) oder als Diesel-Oxidationskatalysatoren (DOC) nicht ausreichend war.

Die erfindungsgemäßen Mischoxid-Katalysatoren sind durch die Zusammensetzung gemäß Anspruch 1 gekennzeichnet.

Die erfindungsgemäßen Katalysatoren ermöglichen überraschenderweise über ein breites Temperaturintervall (140 bis 200°C) eine Erniedrigung des CO-Gehalts in wasserstoffreichen Gasgemischen auf weniger als etwa 50 ppm, vorzugsweise auf weniger als etwa 10 ppm.

Die erfindungsgemäßen Katalysatoren sind andererseits bei der Entfernung von CO aus sauerstoffhaltigen Gasgemischen gegenüber Wasserdampf und CO₂ unempfindlich und zeigen eine geringere Aktivität für unerwünschte Reaktionen, z.B. die Oxidation von Schwefel zu Sulfaten.

Die erfindungsgemäßen Cu/Mn/Ce-Mischoxidkatalysatoren wurden auf ihre Aktivität bei der selektiven Oxidation von CO in wasserstoffreichen Gasgemischen getestet, die ähnlich wie Reformiergas zusammengesetzt waren. Die besten Katalysatoren waren in der Lage, CO bei 145 bis 180°C vollständig ohne eine merkbare Oxidation von Wasserstoff zu oxidieren. Diese Katalysatoren sind also zur Verhinderung der Vergiftung von Brennstoffzellelektroden durch CO geeignet, ohne dass eine nennenswerte Oxidation des Wasserstoffs auftritt. Die Versuche haben auch gezeigt, dass die Cu/Ce/Mn-Mischoxidkatalysatoren für die Oxidation von CO in sauerstoffreichen Gasgemischen, z.B. in Dieselabgasen, sehr gut geeignet sind.

Ein bevorzugter Katalysator ist durch folgende Zusammensetzung gekennzeichnet: 7,5 bis 10 at.-% Ce, 15 bis 30 at.-% Cu, 55 bis 77 at.-% Mn.

Die aktivsten Katalysatoren sind Cu/Mn/Ce-Mischoxidkatalysatoren, die auch Lanthanoxid enthalten können und die folgende Zusammensetzung haben:

| | | | | |
|---|---|---|---|---|
| Ce | 7,5 | bis | 10 | at.-% |
| La | 0 | bis | 5 | at.-% |
| Cu | 15 | bis | 30 | at.-% |
| Mn | 55 | bis | 70 | at.-% |

Ce kann ganz oder teilweise (bis zu 90 at.-%) durch Pr und/oder Zr ersetzt sein. Vorzugsweise umfasst der Mischoxid-Katalysator jedoch Ce. Cu kann teilweise (bis zu 10 at.-%) durch Co, Fe, Ni und/oder Zn ersetzt sein. In beiden Fällen nimmt die Aktivität nicht signifikant ab. Der Zusatz von kleinen Mengen Alkali-, Erdalkali- und Seltenerdmetalloxiden oder -verbindungen in Mengen von etwa 0,2 bis 5 at.-% inhibiert die Reduzierbarkeit mit Wasserstoff und erweitert die Betriebsbedingungen bei mehr als 200°C

Die katalytisch wirksamen Bestandteile des erfindungsgemäßen Katalysators können auf verschiedenen Trägern, vorzugsweise Zirkonoxid, aufgebracht seien.

Die erfindungsgemäßen Cu/Ce/Mn-Mischoxidkatalysatoren können dadurch hergestellt werden, dass man
(a) aus den Salzen von Cu, Mn, Ce und gegebenenfalls La durch Mischfällung mit einem alkalischen Fällungsmittel, wie NaHCO₃ oder Na₂CO₃, einen Niederschlag erzeugt, den Niederschlag trocknet und calciniert;
(b) MnO₂ mit einer Lösung der Salze des Cu, Ce und gegebenenfalls des La imprägniert und das erhaltene Produkt trocknet und calciniert; oder
(c) einen Träger, vorzugsweise zirkonoxid mit einer Lösung der Salze des Cu, Ce, Mn und gegebenenfalls es La imprägniert, die Salze gegebenenfalls mit Hilfe eines Fällungsmittels auf dem Träger fixiert und das erhaltene Produkt trocknet und calciniert.

Nach der Methode (a) können sie durch Mischfällung der Nitrate des Kupfers (Cu(NO₃)₂ x 3 H₂O), des Mangans (Mn(NO₃)₂ x 4 H₂O), des Cers (Ce(NO₃)₃ x 6 H₂O) und gegebenenfalls des Lanthans (LaCl₃ x 7 H₂O), die in gelöster Form vorliegen, mit NaHCO₃ hergestellt werden

Bei dieser Arbeitsweise werden die Lösungen der Nitrate sowie des NaHCO₃ langsam tropfenweise gleichzeitig unter kräftigem Rühren miteinander vermischt, wobei der pH-Wert auf 7,1 bis 7,5 gehalten wird. Wird mit Na₂CO₃-Lösung gefällt, ist der pH-Wert im Bereich von 7,8 bis 8,3 zu halten. Der erhaltene feinteilige Niederschlag wird dekantiert, auf ein Filter gebracht, mit destilliertem Wasser gewaschen und anschließend bei etwa 100 °C getrocknet. Dann wird der Niederschlag in strömender Luft (z.B. bei 400°C 3 Stunden), calciniert. Zum Vergleich wurden bekannte Cu/Mn-Mischoxidkatalysatoren (33/67 at.-%) Cu/Ce-Mischoxidkatalysatoren (15/85 at.-%) in der gleichen Weise hergestellt.

Nach der Methode (b) (Imprägnierverfahren) werden die Nitrate des Kupfers und des Cers gemeinsam in einer kleinen Menge destilliertem Wasser gelöst, und die erhaltene Lösung wird zur Nassimprägnierung von gefälltem MnO₂ bei Raumtemperatur verwendet, worauf das Produkt bei etwa 100°C getrocknet und in einem Luftstrom (z.B.3 Stunden bei 400°C) calciniert wird.

Nach der Methode (c) können die Cu/Ce/Mn-Trägerkatalysatoren durch Nassimprägnierung des Trägers, z.B. Zirkonoxid, hergestellt werden, wobei die Lösungen der Nitrate des Kupfers, Cers und Mangans auf den Träger aufgebracht werden. Durch Behandlung des imprägnierten Trägers mit einer NaHCO₃-Lösung können die katalytisch wirksamen Bestandteile als Hydroxocarbonate auf dem Träger fixiert werden. Die Produkte werden dann bei 100°C getrocknet und in einem Luftstrom (z.B. 3 Stunden bei 400°C) calciniert.

Die erfindungsgemäßen Mischoxidkatalysatoren weisen nach ihrer Herstellung eine amorphe Struktur auf, wie den XRD-Spektren entnommen werden kann. Die Calcinierungstemperatur wird geringer als 500 °C gewählt, weshalb sich eine Perowskitstruktur nicht ausbilden kann. Bei 400°C ist als erste diskrete mineralische Phase Ceroxid zu sehen. Zwei winzige Peaks tauchen bei 138 ° und 141, 5 ° auf. Bei 450 °C bildet dann Cu_{1.5}Mn_{1.5}O₄ die wichtigste Phase, die eine zu Perowskit stark unterschiedliche Struktur aufweist. In dieser Phase besitzt Mangan eine Oxidationsstufe von 3 1/3. Dies bedeutet, dass zumindest einige der Manganionen in der hohen Oxidationsstufe +4 vorliegen (MnO₂) Eine Calcinierung bei Temperaturen oberhalb von 500 °C führt zu einer komplexen Mischung von Tenorit (CuO), Cu-Mn Spinell (CuMn₂O₄) und Fluorit (CeO₂).

Im erfindungsgemäßen Mischoxid-Katalysator ist eine bestimmte Menge (5-15 %) eines vierwertigen Metalls (Cer) in einem Mischoxid aus Cu/Mn-oxid homogen verteilt. Dies ergibt einen exzellenten und sehr selektiven Oxidationskatalysator.

Die Katalysatoren wurden in einem U-förmigen gepackten Bett-Fließreaktor (in Form eines Quarzglasrohres) getestet. Der Reaktor wurde mit Hilfe eines elektrischen Ofens erhitzt. Die Temperatur wurde durch ein in der Mitte des Katalysatorbettes angeordnetes Thermoelement laufend gemessen. Eine gepulverte oder eine sofort nach der Herstellung genommene Katalysatorprobe (Katalysatormenge 200 mg, verdünnt mit 1 cm³ Quarzsand) wurde in den Reaktor gefüllt. Über den Katalysator wurde ein Gasgemisch mit der folgenden Zusammensetzung:
(a)
   0,6 Vol.-% CO
   0,9 Vol.-% O₂
   28,5 Vol.-% H₂O
   14,5 Vol.-% CO₂
   52,0 Vol.-% H₂
   3,5 5 Vol.-% N₂
   (Methanreformiergasgemisch nach der Wassergas-Shift-Reaktion) oder ein Gasgemisch mit der folgenden Zusammensetzung geleitet:
(b)
   0,6 Vol.-% CO
   10,0 Vol.-% O₂
   5,3 vol.-% H₂O
   6,4 vol.-% CO₂
   Rest N₂

Dieses Gasgemisch entspricht einem Dieselabgasgemisch.

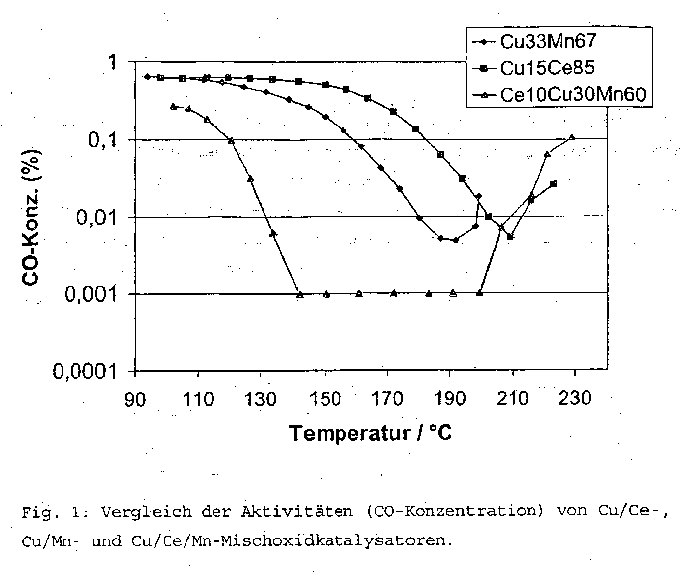

Es wurden handelsübliche Massendurchflussregler zur Herstellung des Gasgemisches verwendet. Alle Gase hatten eine hohe Reinheit. Die Strömungsgeschwindigkeiten wurden unter Verwendung von Massenströmungsmessern (MKS, München) kontrolliert. Um eine Kondensation von Wasser zu verhindern, wurden alle Reaktoren in einem Heizraum bei einer konstanten Temperatur von 100°C gehalten. Die Abgase aus dem Reaktor wurden mit einem HP 6890A-Gaschromatographen unter Verwendung von Porapack Q- und NaX-Kapillarkolonnen analysiert. Die Ergebnisse sind in den Figuren 1 bis 10 dargestellt.

Fig. 1 zeigt das Verhalten eines Cu/Ce/Mn-Mischoxidkatalysators verglichen mit dem Verhalten von binären Cu/Mn- bzw. Cu/Ce-Katalysatoren nach dem Stand der Technik in einem Gasgemisch mit der Zusammensetzung (a) bei Raumgeschwindigkeiten (SV) von 7500 bis 7800 h⁻¹.

Fig. 2 zeigt die CO-Oxidationsaktivität von Cu/Ce/Mn-Mischoxidkatalysatoren mit konstanter Ce-Konzentration (10 at.-%) und verschiedenen Cu/Mn-Verhältnissen, wobei die gleichen Bedingungen wie in Fig. 1 angewendet wurden.

Fig. 3a zeigt den optimalen Ce-Gehalt des Cu/Ce/Mn-Katalysators bei einem festen Cu/Mn-Verhältnis von 0,5, wobei die gleichen Bedingungen wie in Fig. 1 angewendet wurden.

Fig. 3b zeigt Cu/Ce/Mn/La Katalysatoren, die mit NaHCO₃ gefällt wurden, im Vergleich zu Katalysatoren, die mit Na₂CO₃ gefällt wurden. Außerdem ist der Einfluss der Calciniertemperatur zu erkennen.

Fig. 4 zeigt das Verhalten von Cu/Ce/Mn-Katalysatoren mit der gleichen Zusammensetzung, die aber nach unterschiedlichen Verfahren hergestellt wurden. Ein Katalysator mit 10 at.-% Ce, 30 at.-% Cu und 60 at.-% Mn wurde durch Mischfällung der Nitrate mit NaHCO₃ nach der vorstehend angegebenen Arbeitsweise hergestellt, während ein anderer Cu/Ce/Mn-Katalysator durch Imprägnieren von MnO₂ mit Kupfer- und Cernitrat hergestellt wurde, wobei das Atomverhältnis Cu/Ce/Mn 30/10/60 betrug. Die Reaktionsbedingungen waren die gleichen wie in Fig. 1.

Fig. 5 zeigt die Aktivität von Mischoxidkatalysatoren mit 30 at.-% Cu, 10 at.-% Ce und 60 at.-% Mn auf einem ZrO₂-Träger mit einer BET-Oberfläche von etwa 40 m²/g (Hersteller Johnson-Matthey), wobei das gleiche Reaktionsgemisch wie in Fig. 1 verwendet wurde; es wurde jedoch eine Raumgeschwindigkeit (SV) von 2300 h⁻¹ angewendet. Der Trägerkatalysator enthielt 20 Gew.-% aktive Katalysatorbestandteile.

Fig. 6 zeigt die CO-Oxidationsaktivität von Katalysatoren mit 1,2 at.-% Na, 30 at.-% Cu, 10 at.-% Ce und 58,8 at.-% Mn bzw. eines Katalysators mit 0,6 at.-% K, 30 at.-% Cu, 10 at.-% Ce und 59,4 at.-% Mn im Vergleich mit der Aktivität eines Katalysators mit 30 at.-% Cu, 10 at.-% Ce und 60 at.-% Mn, wobei die gleichen Bedingungen wie in Fig. 1 angewendet wurden.

Fig. 7 zeigt die Aktivität eines Katalysators mit 2,5 at.-% Sr, 30 at.-% Cu, 7,5 at.-% Ce und 60 at.-% Mn, eines Katalysators mit 2,5 at.-% Ba, 30 at.-% Cu, 7,5 at.-% Ce und 60 at.-% Mn sowie eines Katalysators mit 5 at.-% La, 10 at.-% Ce, 27,5 at.-% Cu und 57,5 at.-% Mn in Form von Mischoxiden im Vergleich mit der Aktivität eines Mischoxid-Katalysators mit 30 at.-% Cu, 10 at.-% Ce und 60 at.-% Mn, wobei die gleichen Reaktionsbedingungen wie in Fig. 1 angewendet wurden.

Fig. 8 zeigt die Aktivität der Katalysatoren, bei denen das Kupfer durch andere Übergangsmetalle (Co, Fe, Ni, Zn und Cr) ausgetauscht wurde, wobei die gleichen Reaktionsbedingungen wie in Fig. 1 angewendet wurden.

Fig. 9 zeigt einen Katalysator, in dem das Ce ganz oder teilweise durch Pr bzw. Zr ausgetauscht wurde, wobei die gleichen Reaktionsbedingungen wie in Fig. 1 angewendet wurden.

Fig. 10 zeigt die Aktivität von Cu/Ce/Mn/La-Mischoxidkatalysatoren bei der Oxidation von CO in Dieselabgasen. Es wurde das Gasgemisch mit der Zusammensetzung (b) bei einer Raumgeschwindigkeit (SV) von 7700 h⁻¹ verwendet.

Die Ergebnisse zeigen, dass bei Zusatz von Ceroxid zu Cu/Mn-Mischoxidkatalysatoren eine weit höheren Aktivität bei der selektiven Oxidation von CO (verglichen mit der Aktivität von Cu/Mn- bzw. Cu/Ce-Systemen) bei einem Wasserstoffüberschuss und bei niedrigen Temperaturen erzielt wird. Der Cu/Ce/Mn-Mischoxidkatalysator zeigt einen synergistischen Effekt im Vergleich zu den reinen Oxiden und den binären Cu/Mn- und Cu/Ce-Katalysatoren. Wie sich aus Fig. 1 ergibt, ist der hopcalitähnliche Cu/Mn-Katalysator bei Temperaturen von mehr als 100°C aktiv, doch konnte eine vollständige Oxidation des CO erst bei 190°C erreicht werden, wobei eine Reduktion des Katalysators bereits in der Nähe von 200°C beobachtet wurde. Daraus ergibt sich, dass die binären Cu/Mn-Katalysatoren einen sehr geringen Temperaturbereich für die selektive Oxidation von CO in wasserstoffreichen Gasgemischen haben. Der Cu/Ce-Katalysator war sogar noch weniger aktiv und war auch bei 200°C nicht in der Lage, das CO vollständig zu oxidieren.

Im Gegensatz dazu zeigt der erfindungsgemäße Cu/Ce/Mn-Mischoxidkatalysator eine deutliche Aktivität auch bei Temperaturen unterhalb 100°C, wie es in Fig. 1 dargestellt ist. Eine vollständige Oxidation des CO wurde bei 145°C erreicht, wobei die H₂-Oxidation vernachlässigbar klein war. Dieses zeigt, dass Cu/Ce/Mn-Mischoxidkatalysatoren das CO selektiv bei niedrigen Temperaturen oxidieren können, verglichen mit den binären Oxiden (bei 145 bis 200°C).

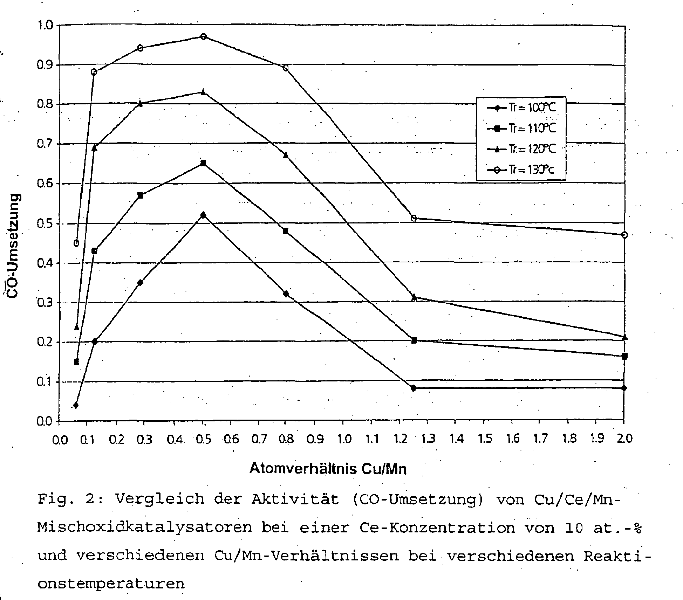

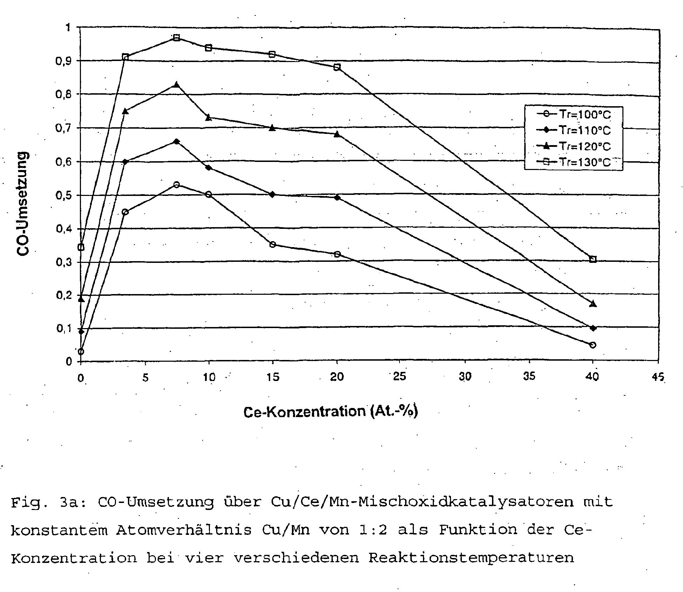

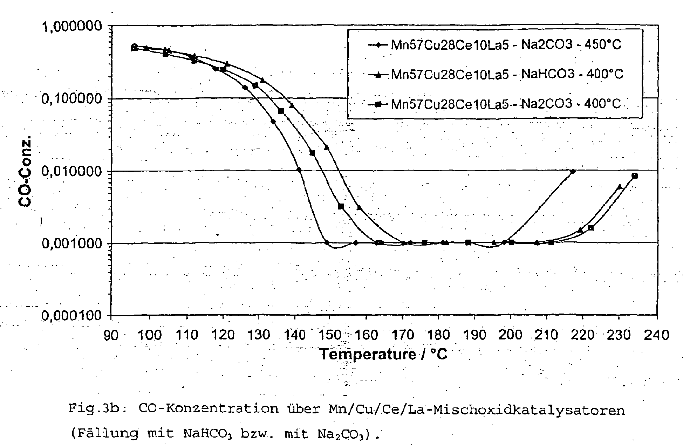

Wie aus den Figuren 2 und 3 hervorgeht, konnte der ternäre Cu/Ce/Mn-Mischoxidkatalysator bei einer Ce-Konzentration von 7,5 bis 10 at.-% und einer Cu-Konzentration von 15 bis 30 at.-% (Rest Manganoxid) optimiert werden.

Die Anmelderin möchte nicht an eine bestimmte Theorie gebunden sein, um die Art der Synergie zwischen diesen drei Oxiden zu erklären; es wird jedoch angenommen, dass kleine Mengen an Cer die Komponenten Cu und Mn in einem höheren Oxidationszustand stabilisieren, wobei das Cer als "Sauerstoffpumpe" für die anderen Oxide dient. Auch kann die Verteilung des Cu durch den Zusatz von Cer verbessert werden. Höhere Cerkonzentrationen führen jedoch zu einer geringeren Aktivität, da das Ceroxid (CeO₂) selbst weniger aktiv ist.

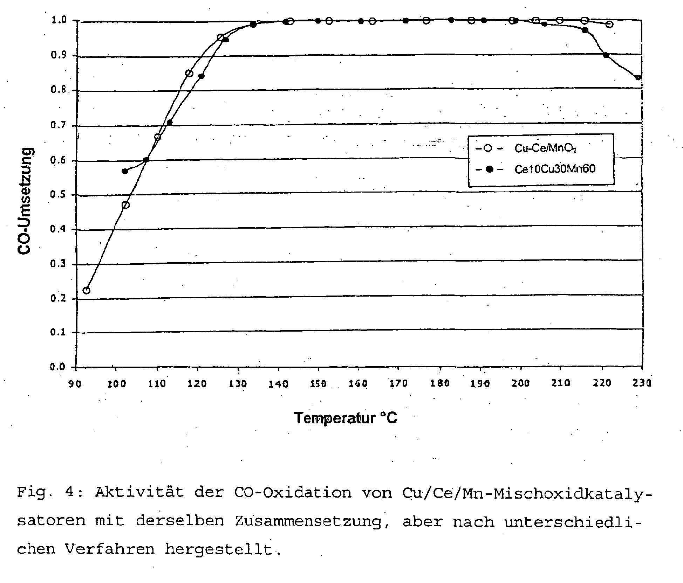

Die Cu/Ce/Mn-Mischoxidkatalysatoren können, wie vorstehend erwähnt, auf unterschiedliche Weise hergestellt werden. Am günstigsten ist jedoch eine Mischfällung unter Verwendung von NaHCO₃ als Fällungsmittel sowie eine Imprägnierung von MnO₂ mit Cu- und Ce-Salzen. Wie in Fig. 4 gezeigt ist, haben die nach diesen beiden Verfahren hergestellten Proben bei gleicher Zusammensetzung eine hohe und vergleichbare Aktivität.

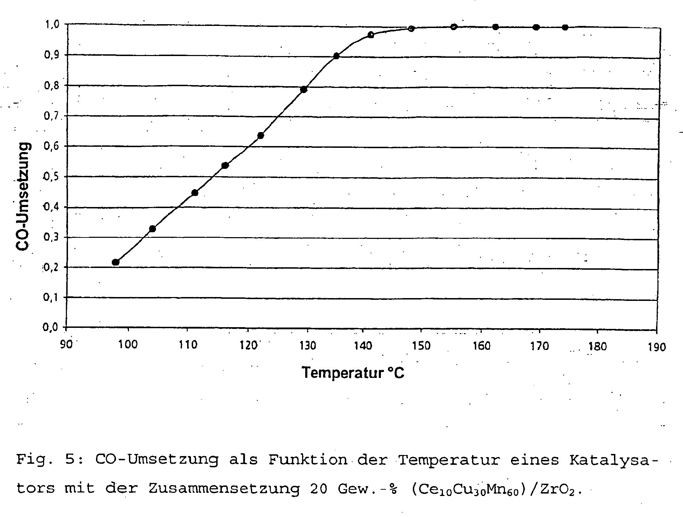

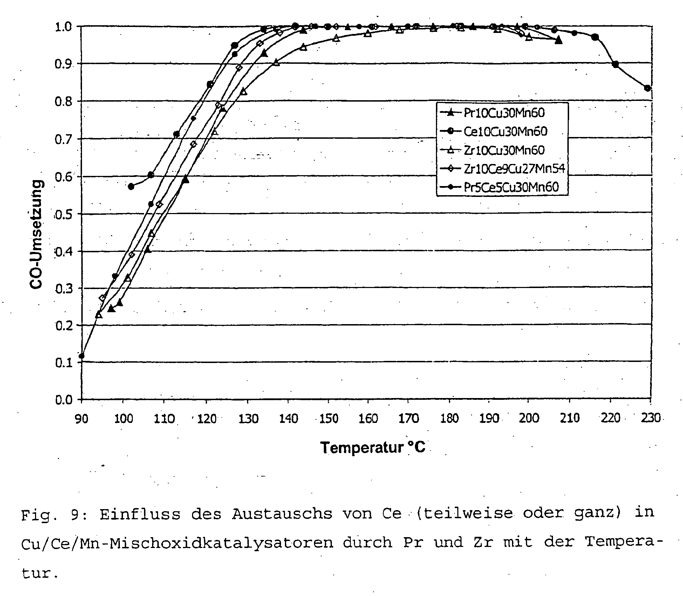

Die erfindungsgemäßen Cu/Ce/Mn-Katalysatoren können als solche oder als Trägerkatalysatoren verwendet werden. Als Träger können beispielsweise Aluminiumoxid, Siliciumoxid oder Zirkonoxid (weniger bevorzugt Ceroxid) verwendet werden. Die beste Aktivität wurde bei einem Cu/Ce/Mn-Katalysator auf ZrO₂ beobachtet. Die Aktivität dieses Trägerkatalysators ist in Fig. 5 dargestellt. Man nimmt an, dass das Zirkonoxid den höheren Wertigkeitszustand des Mn stabilisiert, das im Gitter des ZrO₂ löslich ist. Weiterhin führt der Zusatz von Zr zu einem Cu/Ce/Mn-Mischoxidkatalysator nicht zu einer Abnahme der Aktivität, wie sich aus Fig. 9 ergibt.

Es können verschiedene Verfahren zum Aufbringen des Cu/Ce/Mn-Katalysators auf Träger angewendet werden, z.B. die Imprägnierung, die Abscheidung durch Fällung, die Suspensionsmethode und dergleichen.

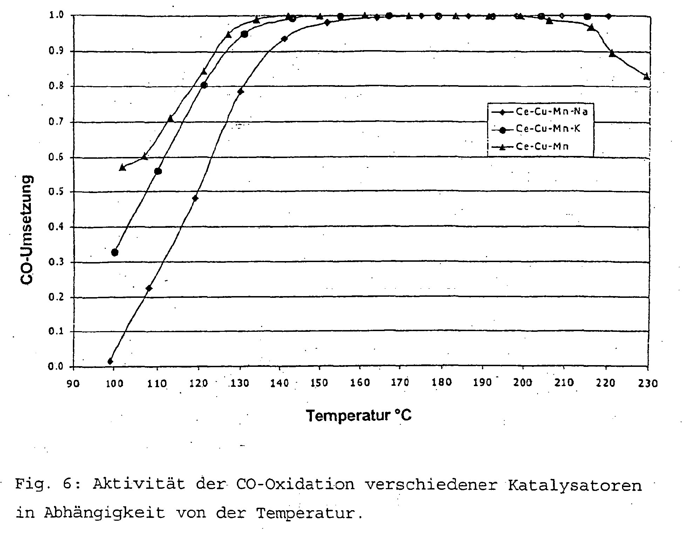

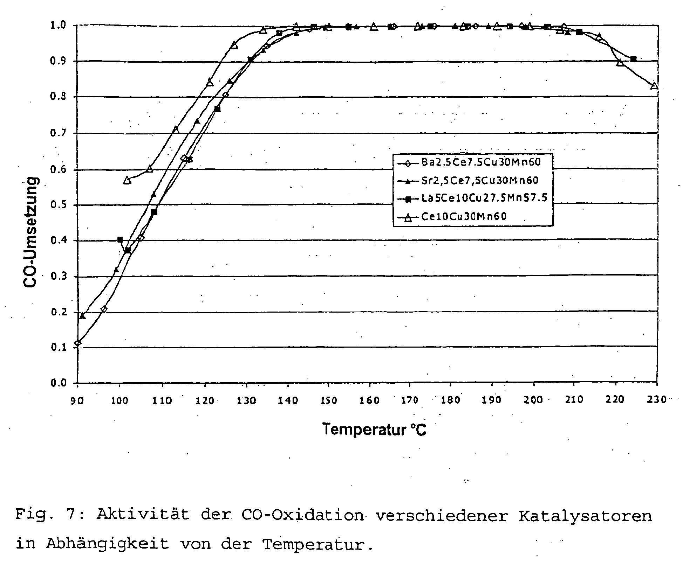

Weiterhin kann der Katalysator durch kleine Mengen von basischen Oxiden z.B. von Alkali-, Erdalkali- und Seltenerdmetallen modifiziert werden, wodurch seine Beständigkeit gegenüber Reduktion durch Wasserstoff bei Temperaturen von mehr als 200°C verbessert wird, so dass der Temperaturbereich, in welchem der Katalysator verwendet werden kann, erweitert werden kann. Wie aus Fig. 6 hervorgeht, ergibt der Zusatz von kleinen Mengen von Alkaliverbindungen eine Erhöhung der Wirksamkeit des Katalysators bei und über 200°C für die quaternären Oxide, während für den ternären Cu/Ce/Mn-Katalysator bei Temperaturen von mehr als 200°C das CO erneut auftrat. Der Zusatz von Erdalkali- bzw. Seltenerdmetallen (La) ergibt nach Fig. 7 einen weniger ausgeprägten Effekt, doch kann auch hier eine Verbesserung des Katalysatorverhaltens bei erhöhten Temperaturen beobachtet werden. Die vorstehend angegebenen Komponenten erhöhen nicht die Aktivität und vermindern diese bei höheren Konzentrationen.

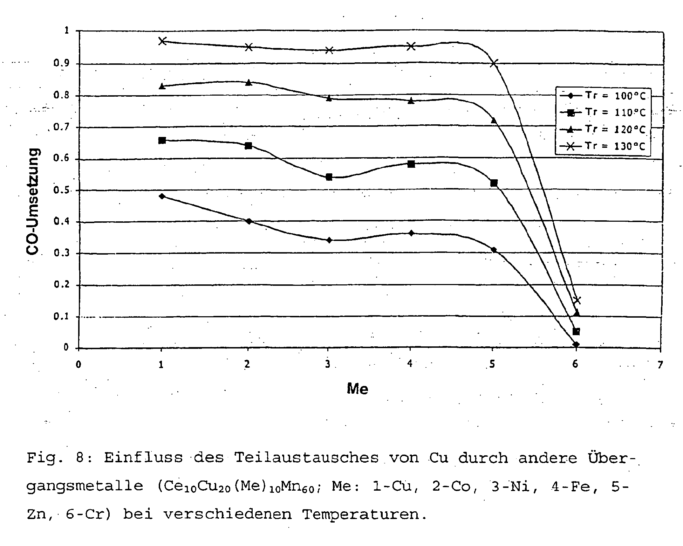

Es wurde auch gefunden, dass ein Teil des Kupfers in der Katalysatorzusammensetzung durch andere Übergangsmetalle nämlich Co, Fe, Zn oder Ni, ersetzt werden kann, wie es in Fig. 8 dargestellt ist. Es wird die gleiche bzw. eine nur geringfügig verminderte Aktivität erhalten. Durch die Zugabe von Cr wird die Tieftemperatur-Aktivität vermindert.

Es wurde ferner festgestellt, dass ein Teil des Ce mit Erfolg auch durch Praseodym und/oder Zirkon ersetzt werden kann. Das Zirkon wird hierbei in das Gitter eingebaut (vgl. Fig. 9), nicht dagegen, wenn es als Träger verwendet wird (vgl. Fig. 5). Bei einem vollständigen Ersatz des Cers wird jedoch die Aktivität vermindert, wie es aus Fig. 9 ersichtlich ist.

Der Anteil an Ceroxid im erfindungsgemäßen Mischoxid-Katalysator ist sehr wichtig. Ceroxid ist aus den 3-Wegekatalysatoren mit Edelmetallen wegen seiner Sauerstoffspeicherfähigkeit bekannt. Der Grund dafür ist der mögliche Oxidationsstufenwechsel von Ce (IV) nach Ce (III).

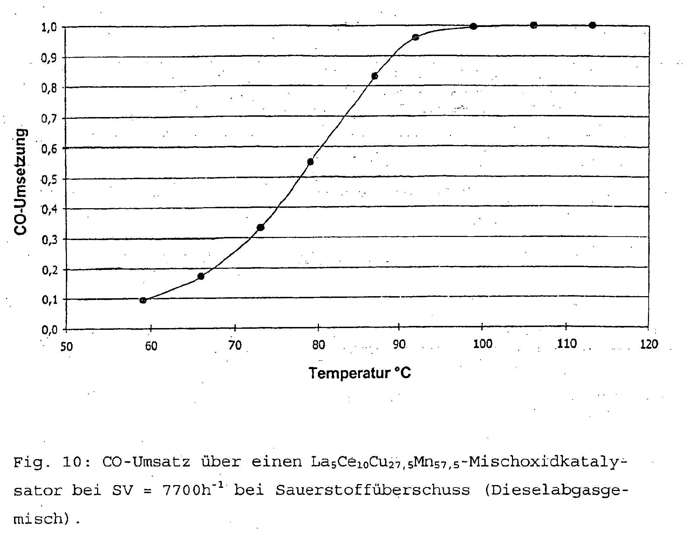

Die erfindungsgemäßen Katalysatoren eignen sich auch für die Entfernung von CO in sauerstoffhaltigen Gasen sowie in Gegenwart von CO₂ und H₂O. Derartige Gase sind typisch für Dieselabgase. Wie aus Fig. 10 hervorgeht, wurde eine vollständige Oxidation des CO bei 100°C mit dem Cu/Ce/Mn-Mischoxidkatalysator erreicht, wobei die CO-Konzentration bei einer Raumgeschwindigkeit (SV) von 110000 h⁻¹ und bei einer Reaktionstemperatur von 145°C nur 10 ppm betrug. Deshalb ist dieser wirtschaftlich günstige Katalysator zur Entfernung von CO aus Automobilabgasen sehr geeignet. Seine Aktivität ist vergleichbar mit der von Platin oder Palladium enthaltenen Katalysatoren, die als Automobil-Abgaskatalysatoren verwendet werden, die aber durch Schwefelverbindungen leicht vergiftet werden können.

## Patentansprüche

1. Mischoxid-Katalysator, insbesondere zur selektiven Oxidation von CO in wasserstoffreichen Gasgemischen, oder in sauerstoffhaltigen Gasgemischen in Gegenwart von Wasser und Kohlendioxid, enthaltend 5 bis 10 at.-% Ce, 5 bis 60 at.-% Cu, 30 bis 90 at.-% Mn.

2. Katalysator nach Anspruch 1, **gekennzeichnet durch** die folgende Zusammensetzung: 7,5 bis 10 at.-% Ce, 15 bis 30 at.-% Cu, 55 bis 77 at.-% Mn.

3. Katalysator nach Anspruch 1 oder 2, **gekennzeichnet durch** einen Gehalt an Lanthan (als La₂O₃) in Mengen von 2,0 bis 5,0 at.-%.

4. Katalysator nach einem der Ansprüche 1 bis 3, **gekennzeichnet durch** Zusätze von Alkali-, Erdalkali- oder Seltenerdmetalloxide oder Verbindungen in Mengen von 0,2 bis 5 at.-%.

5. Katalysator nach einem der Ansprüche 1 bis 4, **dadurch gekennzeichnet, dass** das Kupfer (bis zu 10 at.-%) durch Cobalt, Eisen, Nickel und/oder Zink ersetzt ist.

6. Katalysator nach einem der Ansprüche 1 bis 4, **dadurch gekennzeichnet, dass** das Cer teilweise durch Zirkon und/ oder Praseodym ersetzt ist.

7. Katalysator nach einem der Ansprüche 1 bis 6, **dadurch gekennzeichnet, dass** die katalytisch wirksamen Bestandteile auf einem Träger, vorzugsweise ZrO₂ aufgebracht sind.

8. Verfahren zur Herstellung der Katalysatoren nach einem der Ansprüche 1 bis 7, **dadurch gekennzeichnet, dass** man
(a) aus Salzen von Cu, Mn, Ce und gegebenenfalls La durch Mischfällung mit einem alkalischen Fällungsmittel, wie NaHCO₃ oder Na₂CO₃, einen Niederschlag erzeugt, den Niederschlag trocknet und calciniert;
(b) MnO₂ mit einer Lösung von Salzen des Cu, Ce und gegebenenfalls des La imprägniert und das erhaltene Produkt trocknet und calciniert; oder
(c) einen Träger, vorzugsweise Zirkonoxid, mit einer Lösung von Salzen des Cu, Ce, Mn und gegebenenfalls La imprägniert, die Salze gegebenenfalls mit Hilfe eines Fällungsmittels auf dem Träger fixiert und das erhaltene Produkt trocknet und calciniert.

9. Verfahren zur selektiven Oxidation von CO in wasserstoffreichen Gasgemischen, insbesondere für Brennstoffzellen, **dadurch gekennzeichnet, dass** man das wasserstoffreiche Gas unter Zusatz von Sauerstoff in einer dem CO entsprechenden stöchometrischen Konzentration über einen Katalysator nach einem der Ansprüche 1 bis 7 leitet.

10. Verfahren nach Anspruch 9, **dadurch gekennzeichnet, dass** man das wasserstoffreiche Gas mit der Zusammensetzung 0,2 bis 1,0 Vol.-% CO, 10,0 bis 20,0 Vol.-% CO₂, 15 bis 30 Vol.-% H₂O, Rest H₂; oder H₂ und N₂, verdünnt mit O₂ oder Luft, im Verhältnis O₂/CO von 1,0 bis 1,5, bei 100 bis 200 °C, vorzugsweise bei 155 bis 190 °C, mit einer Raumgeschwindigkeit von 1000 h⁻¹ bis 15000 h⁻¹, vorzugsweise mit 5000 h⁻¹ bis 7500 h⁻¹ über den Katalysator leitet.

11. Verfahren zur Oxidation von CO in einem sauerstoffhaltigen Gemisch in Gegenwart von Wasser und Kohlendioxid, insbesondere zur Nachbehandlung von Automobilabgasen, **dadurch gekennzeichnet, dass** man das sauerstoffhaltige Gasgemisch über einen Katalysator nach einem der Ansprüche 1 bis 7, gegebenenfalls im Gemisch mit einem anderen Oxidationskatalysator, leitet.

## Claims

1. A mixed oxide catalyst, in particular for the selective oxidation of CO in hydrogen-rich gas mixtures, or in oxygen-containing gas mixtures in the presence of water and carbon dioxide, containing 5 to 10 at. % Ce, 5 to 60 at. % Cu, 30 to 90 at. % Mn.

2. A catalyst according to Claim 1, **characterised by** the following composition: 7.5 to 10 at. % Ce, 15 to 30 at. % Cu, 55 to 77 at. % Mn.

3. A catalyst according to Claim 1 or 2, **characterised by** a lanthanum content (as La₂O₃) in an amount of 2.0 to 5.0 at. %.

4. A catalyst according to any one of Claims 1 to 3, **characterised by** additions of alkali, alkaline earth or rare earth metal oxides or combinations thereof in amounts of 0.2 to 5 at. %.

5. A catalyst according to any one of Claims 1 to 4, **characterised in that** the copper (up to 10 at. %) is replaced by cobalt, iron, nickel and/or zinc.

6. A catalyst according to any one of Claims 1 to 4, **characterised in that** the cerium is partly replaced by zirconium and/or praseodymium.

7. A catalyst according to any one of Claims 1 to 6, **characterised in that** the catalytically active components are applied to a support, preferably ZrO₂.

8. A method of preparing a catalyst according to one of Claims 1 to 7, **characterised in that**
(a) a precipitate is produced from salts of Cu, Mn, Ce and optionally La by co-precipitation with an alkaline precipitating agent, such as NaHCO₃ or Na₂CO₃, and the precipitate is dried and calcined;
(b) MnO₂ is impregnated with a solution of salts of Cu, Ce and optionally La, and the resultant product is dried and calcined, or
(c) a support, preferably zirconium oxide, is impregnated with a solution of the salts of Cu, Ce, Mn and optionally La, the salts are optionally fixed on the carrier by a precipitating agent and the resultant product is dried and calcined.

9. A method for the selective oxidation of CO in hydrogen-rich gas mixtures, in particular for fuel cells, **characterised in that** the hydrogen-rich gas is transmitted, with addition of oxygen in an amount corresponding to the stoichiometric concentration of CO, over a catalyst according to any one of Claims 1 to 7.

10. A method according to Claim 9, **characterised in that** the hydrogen-rich gas having a composition of 0.2 to 1.0 vol. % CO, 10.0 to 20.0 vol. % CO₂, 15 to 30 vol. % H₂O, the remainder H₂; or H₂ and N₂, diluted with O₂ or air, at a ratio of O₂/CO of 1.0 to 1.5, at 100 to 200°C, preferably at 155 to 190°C, at a spatial velocity of 1000 h⁻¹ to 15000 h⁻¹, preferably 5000 h⁻¹ to 7500 h⁻¹, is conducted over the catalyst.

11. A method for the oxidation of CO in an oxygen-containing mixture in the presence of water and carbon dioxide, in particular for the aftertreatment of automotive exhaust gases, **characterised in that** the oxygen-containing gas mixture is conducted over a catalyst according to any one of Claims 1 to 7, optionally in mixture with another oxidation catalyst.

## Revendications

1. Catalyseur d'oxydes mixtes, en particulier destiné à l'oxydation sélective de CO dans des mélanges gazeux riches en hydrogène ou dans des mélanges gazeux contenant de l'oxygène, en présence d'eau et de dioxyde de carbone, contenant de 5 à 10 at. % de Ce, de 5 à 60 at. % de Cu, de 30 à 90 at. % de Mn.

2. Catalyseur selon la revendication 1, **caractérisé par** la composition suivante : de 7,5 à 10 at. % de Ce, de 15 à 30 at. % de Cu, de 55 à 77 at. % de Mn.

3. Catalyseur selon la revendication 1 ou 2, **caractérisé par** une teneur en lanthane (en tant que La₂O₃) dans des quantités de 2,0 à 5,0 at. %.

4. Catalyseur selon l'une quelconque des revendications 1 à 3, **caractérisé par** des additions d'oxydes de métaux alcalins, de métaux alcalino-terreux ou de métaux de terres rares ou des composés dans des quantités de 0,2 bis 5 at. %.

5. Catalyseur selon l'une quelconque des revendications 1 à 4, **caractérisé en ce que** le cuivre (jusqu'à 10 at. %) est remplacé par du cobalt, du fer, du nickel et/ou du zinc.

6. Catalyseur selon l'une quelconque des revendications 1 à 4, **caractérisé en ce que** le cérium est remplacé partiellement par du zirconium et/ou du praséodyme.

7. Catalyseur selon l'une quelconque des revendications 1 à 6, **caractérisé en ce que** les constituants actifs du point de vue catalytique sont appliqués sur un support, de préférence du ZrO₂.

8. Procédé pour la fabrication de catalyseurs selon l'une quelconque des revendications 1 à 7, **caractérisé en ce que**
(a) à partir de sels de Cu, de Mn, de Ce et, le cas échéant, de La, on produit un précipité par précipitation mixte avec un agent de précipitation alcalin, comme le NaHCO₃ ou le Na₂CO₃, on sèche et calcine le produit ;
(b) on imprègne du MnO₂ avec une solution de sels de Cu, de Ce et, le cas échéant, de La et on sèche et calcine le produit obtenu ; ou
(c) on imprègne un support, de préférence de l'oxyde de zirconium, avec une solution de sels de Cu, de Ce, de Mn et, le cas échéant, de La, on fixe les sels sur le support, le cas échéant, avec un agent de précipitation, et on sèche et calcine le produit obtenu.

9. Procédé pour l'oxydation sélective de CO dans des mélanges gazeux riches en hydrogène, en particulier pour des piles à combustible, **caractérisé en ce que** l'on achemine le gaz riche en hydrogène sous addition d'oxygène, dans une concentration stoechiométrique correspondant au CO, via un catalyseur selon l'une quelconque des revendications 1 à 7.

10. Procédé selon la revendication 9, **caractérisé en ce que** l'on conduit via le catalyseur le gaz riche en hydrogène avec la composition de 0,2 à 1,0 % en volume de CO, de 10,0 à 20,0 % en volume de CO₂, de 15 à 30 % en volume de H₂O, un reste de H₂ ; ou H₂ et N₂, dilués avec l'O₂ ou l'air, dans le rapport O₂/CO de 1,0 à 1,5, à une température de 100 à 200° C, de préférence, de 155 à 190° C, avec une vitesse spatiale de 1000 h⁻¹ à 15000 h⁻¹, de préférence, de 5000 h⁻¹ à 7500 h⁻¹.

11. Procédé pour l'oxydation de CO dans un mélange oxygéné en présence d'eau et de dioxyde de carbone, en particulier destiné au traitement subséquent de gaz d'échappement automobiles, **caractérisé en ce que** l'on conduit le mélange gazeux contenant de l'oxygène via un catalyseur selon l'une quelconque des revendications 1 à 7, le cas échéant, en mélange avec un autre catalyseur d'oxydation.
